# EUROPEAN PATENT SPECIFICATION

(11) **EP 0 656 023 B1**
(45) Date of publication and mention of the grant of the patent: **26.03.1997**
(21) Application number: 93918085.7
(22) Date of filing: 26.07.1993
(51) Int. Cl.: C09D 163/00, C09D 5/03, C08G 59/12

(54) **POWDER COATING COMPOSITION AND THE USE OF GLYCIDYL ESTER TERMINATED POLYESTERS IN THE PREPARATION OF POWDER COATING**
PULVERLACKZUSAMMENSETZUNG UND DIE VERWENDUNG VON POLYESTERN MIT GLYCIDYLESTERENDGRUPPEN IN DER HERSTELLUNG VON PULVERLACKZUSAMMENSETZUNGEN
REVETEMENT EN POUDRE ET UTILISATION DE POLYESTERS TERMINES PAR UN ESTER DE GLYCIDYLE DANS LA PREPARATION DE REVETEMENTS EN POUDRE

(30) Priority: 12.08.1992 NL 9201443
(43) Date of publication of application: 07.06.1995
(73) Proprietor: DSM N.V., 6411 TE Heerlen (NL)
(72) Inventor: STANSSENS, Dirk, Armand, Wim, B-3620 Lanaken (BE); VAN DEN ELSHOUT, Wilhelmus, Henricus, Hubertus, An, NL-6132 SM Sittard (NL)
(86) International application number: NL9300157
(87) International publication number: WO9404589

(56) References cited:
- CH-A- 473 798
- DE-A- 2 037 701
- DE-B- 1 030 824
- DATABASE WPI Derwent Publications Ltd., London, GB; AN 77-45676Y & JP,A,52 003 700 (UBE INDUSTRIES KK) 12 January 1977 cited in the application
- DATABASE WPI Derwent Publications Ltd., London, GB; AN 75-36840W & JP,B,50 011 439 (NITTO ELECTRIC IND KK) 1 May 1975

## Description

The invention relates to a powder coating composition and to the use of glycidyl ester terminated polyesters in the preparation of powder coatings.

The glycidyl ester terminated polyester employed in the invention is characterized by formula (I): 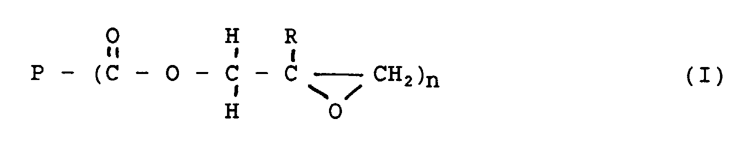 wherein said formula:
- P represents the polymeric backbone of the polyester; which is based on aromatic carboxylic acids;
- R is H or (C₁₋C₅) alkyl; and
- n is greater than 2,
and wherein said glycidyl ester terminated polyester has a Mn between 500 and 10,000, a Tg between 30°C and 80°C, and an epoxy equivalent weight (EEW) between 250 and 5000 grams.

Preferably, R is H, the Mn is between 800 and 5000, the Tg is between 35°C and 60°C and the EEW is between 620 and about 2000.

JP-A-52003700 discloses diglycidylesters with epoxy groups at ends of straight polyester chain obtained from dicarboxylic terminated polyester and epoxyhaloalkane followed by dehydrohalogenation of the resulting halohydrin. This disclosure relates to two-functional compounds whereas the present invention relates to a polyester having an average functionality fₙ higher than 2, because in formula (I) n is greater than 2.
Furthermore, in JP-A-52003700 the two-functional esters are combined with epoxyfunctional resins, in contrast to the present invention which combines the polyester according to the invention with carboxyl functional polymers. Next, the JP-A-disclosure does not relate to powder coating compositions.

DE-B-1030824 discloses a process with salt products for the manufacture of epoxide compounds comprising reacting a salt of a polybasic aliphatic carboxylic acid with an epoxide containing replacable halogen. The polyesters obtained by reaction of aliphatic carboxylic acid and alcohol are because of the relatively high acid values and the resulting low glass transition temperature of the polyester unsuitable for the preparation of powder coatings. In contrast, the polyesters in the present invention are based on aromatic carboxylic acids, the acid number of the starting polymers is between about 15 and about 95 and the glass transition temperature ranges between 30°C and 80°C.

The glycidyl ester terminated polyesters employed in the invention are preferably and are readily obtained by dissolving a polyester having terminal carboxyl groups in an excess of epihaloalkane. Subsequently, a catalyst is added to the reaction mixture and the mixture is then stirred, at elevated temperature, for a sufficient selected period of time so that all carboxylic acid is reacted. An exemplary such period of time is 1 hour. Subsequently, the reaction mixture is washed with water to remove the catalyst. The excess unreacted epihaloalkane is then removed, for example, by being evaporated off at a suitable selected temperature such as, for example, 95°C, while under reduced pressure such as, for example, 666,5 Pa (5 mm Hg).

In the preferred process, suitable catalysts include, for instance, benzyl trimethyl ammonium bromide, tetramethyl ammonium bromide and benzyl trimethyl ammonium chloride, although benzyl trimethyl ammonium bromide is preferred. In the preferred process the stirring is conducted at elevated temperature, such as for example 117°C, and suitable temperatures range from about 70°C to about 180°C, and preferably from about 100°C to about 130°C.

Illustrative suitable epihaloalkanes useful in the proces include, for instance, 1-chloro-2,3-epoxypropane (epichlorohydrin), 1-chloro-2-methyl-2,3-epoxy propane, and 1-chloro-2,3-epoxybutane, although 1-chloro-2,3-epoxy propane is preferred. Still other usefully employed epihaloalkanes include, for example, epibromohydrin.

Excess epihaloalkane is removed in the preferred process by distillation or evaporation under reduced pressure. Reduced pressure means, for example, 666,5 Pa, and can range, for instance, from 1,33 Pa (0.01 mm Hg) to about 93310,0 Pa (700 mm Hg). The actual reduced pressure employed can be readily selected by a person skilled in the art given the objectives set forth herein.

Advantageously, in the preferred process no salt products are formed. This avoids the difficult removal of salts from the glycidyl-ester terminated polyester.

The polyesters according to the present invention can also be obtained through reaction of a carboxylic acid terminated polyester with an epihalohydrin, which yields the halohydrin ester of the carboxylic acid, followed by dehydrohalogenation of the polyhalohydrin ester obtained using a base such as, for example, sodium hydroxide.

Another suitable process is based on the reaction of a salt, preferably an alkali metal salt of a polyester, with an epihalohydrin, preferably epichlorohydrin.

Suitable polyesters having terminal carboxyl functionality can be obtained by following preparation methods from essentially aromatic polycarboxylic acids such as, for example, phthalic acid, isophthalic acid, terephthalic acid, pyromellitic acid, trimellitic acid, 3,6-dichloro phthalic acid, tetrachloro phthalic acid, or, if obtainable, the anhydrides, acid chlorides or lower alkyl esters thereof.

Such methods are for example described by Misev in Powder Coatings, Chemistry and Technology, pages 34-35 (John Wiley and Sons, 1991).

The polyesters can be prepared by following methods known to those skilled in the art, such as for example esterification or trans-esterification, optionally in the presence of standard catalysts such as, for example, dibutyltin oxide or tetrabutyl titanate. Final products having an acid value within a desired range are obtainable by a suitable choice of the preparation conditions and of the COOH/OH ratio.

Preferably the carboxylic acid component is composed at least of 50% by weight, more preferably at least 70% by weight, of isophthalic acid and/or terephthalic acid.

The polycarboxylic acids used can, in addition, be cycloaliphatic and/or acyclic polycarboxylic acids such as, for example, tetrahydrophthalic acid, hexahydroendomethylene terephthalic acid, hexachlorotetrahydrophthalic acid, azelaic acid, sebacic acid, decane-dicarboxylic acid, dimer fatty acid, adipic acid, succinic acid and maleic acid, in amounts of up to not more than 30 mol%, preferably up to not more than 20 mol%, of the total carboxylic acids. Hydroxy-carboxylic acids and/or, optionally, lactones such as, for example, 12-hydroxystearic acid, ε-caprolactone and the hydroxy pivalic acid ester of neopentyl glycol can also be used. In minor amounts, monocarboxylic acids such as, for example, benzoic acid, tert-butylbenzoic acid, hexahydrobenzoic acid and saturated aliphatic monocarboxylic acids may also be added during the preparation.

Furthermore, aliphatic diols having 2 to 20 carbon atoms, such as for example, ethylene glycol, 1,2-propanediol, 1,3-propanediol, 1,2-butane-diol, 1,4-butanediol, 1,3-butanediol, 2,2-dimethyl-1,3-propanediol (= neopentyl glycol), 2,5-hexanediol, 1,6-hexanediol, 2,2-[bis(4-hydroxy-cyclohexyl)]propane, 1,4-dimethylolcyclohexane, diethylene glycol, dipropylene glycol and 2,2-bis[4-(2-hydroxy-ethoxy)]phenylpropane and smaller amounts of polyols such as glycerol, hexanetriol, pentaerythritol, sorbitol, trimethylolethane, trimethylolpropane and tris(2-hydroxy-ethyl)isocyanurate can be used. Preferably, the alcohol component contains at least 50 mol% neopentyl glycol and/or propylene glycol.

The acid number of the polymer that contains carboxyl groups is preferably between about 15 and about 95, and more preferably is between about 20 and about 70.

The glass transition temperature preferably ranges between about 30°C and about 80°C, and more preferably ranges between about 40°C and about 75°C.

The viscosity at 165°C (Emila, D = 17.6 s⁻¹) can be between about 100 and about 1000 dPas, and preferably is between about 100 and about 800 dPas.

Suitable compounds for reacting with polycarboxylic acids to yield the desired polyesters are also monoepoxides such as, for example, ethylene oxide, propylene oxide, monocarboxylic acid glycidyl ester (for example Cardura E10™; Shell) or phenyl glycidyl ether.

Powder coatings have become increasingly popular over the past decade because these coatings are environmentally friendly, easy to use and of good quality. In this context, coating systems based on polyesters play an important part. A number of coating systems can be distinguished. One of these systems is a homogeneous pulverulent composition of carboxyl-functional polyester and triglycidyl isocyanurate (TGIC) in a ratio of 93:7. This system is used if good weather resistance is required (for example, cladding, garden furniture, bicycles). Another system consists of an acid polyester in combination with an epoxy resin based on bisphenol-A. However, this system is suitable only for indoor use (for example refrigerators) because coatings made from this system relatively rapidly discolour on exposure to outdoor light (UV). In both systems, curing takes place by reaction of a carboxyl groups of the polyester with the epoxide groups of the second component, optionally in the presence of a catalyst.

The powder coatings based on carboxyl functional compounds and epoxy functional compounds must have good impact strength, good gloss, good flow properties, a good curing time, good storage stability, good solvent resistance, good colour properties and good weather resistance.

A powder coating composition formulated using a glycidyl ester terminated polyester according to formula (I) results in coatings that are very flexible and yet sufficiently tough, have good weather resistance, have very good overbake resistance (a measure of the discoloration upon prolonged curing) and that have good flow properties, while the other properties that are desired are also obtained.

Preferably, in formula (I) R is H and the Mn is between 800 and 5000, the Tg is between 35°C and 60°C, and the EEW is between 620 and 2000.

The glycidyl ester terminated polyesters employed in the present invention can be used in combination with polymers that contain carboxyl groups in any desirable weight ratio, depending on the application. The ratio of the polyester of the present invention to a polymer having carboxyl groups can for example, range from 95:5 to 15:85, although the ratio is preferably between 80:20 and 20:80.

Polymers that contain carboxyl groups include polyesters, polyacrylates, polyurethanes and polycarbonates, although polyesters and polyacrylates are preferred. Illustrative commercially available polymers having carboxyl groups include URALAC P3400® of DSM Resins.

The glycidyl ester terminated polyester employed in the invention can also be used in combination with (C₄-C₂₀) aliphatic di- or tricarboxylic acids such as, for example, decane-dicarboxylic acid, adipic acid, azelaic acid, glutaric acid, succinic acid, suberic acid, sebacic acid, dimer fatty acid and pimelic acid. The weight ratio between the polyester of the present invention and the carboxylic acid can be selected by one skilled in the art depending on the desired powder coating application.

Curing of the polyester employed in the invention can also take place with, for example, dicyano diamide, polyanhydrides, polyamines, polyalcohols or through self-crosslinking via etherification.

Any conventional catalysts for the epoxy-acid reaction can be used. Suitable catalysts include for example N-dialkylamine pyridines such as N-dimethyl-aminopyridine, benzotriazole, tertiary amines such as, for example, triethylamine, tetramethyl guanidine (TMG), tetraalkyl phosphonium bromide and lithium hydroxide. These catalysts may optionally be blocked. TMG may, for example, be blocked by means of a compound that contains isocyanate groups or by means of an acylating compound. The catalysts can be applied in amounts between, for example, 0.01 and 2.0 wt.% with respect to the total composition.

The importance of the parameters described, of the resin-crosslinker ratio and of the amount of catalyst is explained by Tosko Misev in Powder Coatings; Chemistry and Technology (John Wiley and Sons, 1991), pp. 174-204.

Of course, all the standard additives such as, for example, pigments, fillers, flow-promoting agents, stabilizers and catalysts can be added to the powder coating systems. Suitable pigments include, for example, inorganic pigments such as titanium dioxide, zinc sulphide, iron oxide and chromium oxide, and organic pigments such as azo compounds. Suitable fillers include, for example, metal oxides, silicates, carbonates and sulphates.

The powder coatings can be prepared in the customary manner and tested as described in for instance Misev, Powder Coatings; Chemistry and Technology, pp. 225-226 and 284-299.

Powder coating compositions according to the invention can be used as coating agents for metal, wood and plastic substrates. Examples are general-purpose industrial top coats, top coats on machinery and equipment, in particular top coats on metal, for example for tins, domestic and other small equipment and cars.

The invention is explained with reference to the following examples, without being limited thereto.

### Examples

In the Examples reference is made to commercially available carboxyl functional polyesters of DSM Resins B.V. In Example I Uralac 3500® is a polyester having terminal carboxyl functionally of fₙ = 2.35. In Example II Uralac 5050® is a polyester having a carboxyl functionally greater than 3.5 and an acid number of 75 to 85.

### Example I

### Preparation of a glycidyl ester terminated polyester according to formula (I)

280 parts by weight of epichlorohydrin were added to 100 parts by weight of Uralac 3500® (DSM Resins B.V.) with an acid number of 35. After heating up to 117°C 2 parts by weight of benzyl trimethyl ammonium bromide were added to the homogeneous solution. The solution was then stirred for 1 hour at 117°C and subsequently cooled down to 25°C. The organic phase was washed with water (3 x 200 ml) and evaporated at 95°C under reduced pressure (133,3 Pa)[1 mm Hg].

### Example II

### Preparation of a powder coating on the basis of a glycidyl terminated polyester according to the present invention

In an extruder (Werner & Pfleiderer, ZSK 30) 95 parts by weight of the polyester according to Example I were mixed for 1 minute at 130°C with 40.7 parts by weight of Uralac P5050® (DSM Resins B.V.) with an acid number of 75 mg KOH/g, with 1 part by weight of triphenyl ethyl phosphonium bromide, with 9 parts by weight of flow-promoting agent (Resiflow PV-5®, Worlee) and with 4.5 parts by weight of benzoin.

After cooling, the extrudate was subjected to size reduction, pulverization and screening down to a particle size of at most 90 µm.

The powder coating was electrostatically applied to steel panels and cured as prepared hereinabove during 20 minutes at 185°C.

On visual inspection the powder coating was found to have good flow properties, good impact strength (> 160iP or 1.85 kg.m), good acetone resistance (> 100 RUBS), and good overbake resistance (1 hour, 200 °C, dE = 0.4; 1 hour, 220°C, dE = 0.8).

The test methods that were employed are described in Misev, Powder Coatings, Chemistry and Technology, pages 296-299 (1991).

## Claims

1. Use of a glycidyl ester terminated polyester according to formula (I) 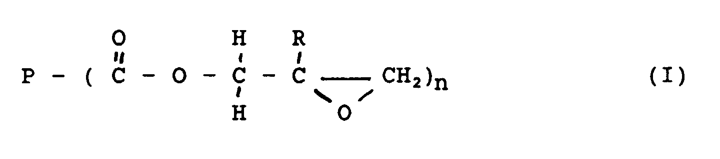 wherein said formula:
- P represents the polymeric backbone of the polyester which is based on aromatic carboxylic acids;
- R is H or (C₁₋C₅) alkyl; and
- n is greater than 2,
and wherein said glycidyl ester terminated polyester has a Mn between 500 and 10,000, a Tg between 30°C and 80°C, and an epoxy equivalent weight (EEW) between 250 and 5000 grams, in the preparation of powder coatings.

2. Use according to claim 1, characterized in that R is H, Mₙ is between 800 and 5000, Tg is between 35°C and 60°C, and EEW is between 620 and 2000.

3. A powder coating composition comprising a glycidyl ester terminated polyester according to formula (I) 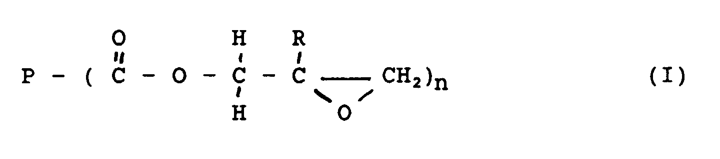 wherein said formula:
- P represents the polymeric backbone of the polyester which is based on aromatic carboxylic acids;
- R is H or (C₁₋C₅) alkyl; and
- n is greater than 2,
and wherein said glycidyl ester terminated polyester has a Mn between 500 and 10,000, a Tg between 30°C and 80°C, and an epoxy equivalent weight (EEW) between 250 and 5000 grams; and a carboxyl-functional polymer.

4. Powder coating composition according to claim 3, characterized in that R is H, Mₙ is between 800 and 5000, the Tg is between 35°C and 60°C, and the EEW is between 620 and 2000.

5. Wholly or partly covered substrate, characterized in that as coating material use is made of a powder coating composition according to any one of claims 3-4.

## Patentansprüche

1. Verwendung eines Glycidylester-terminierten Polyesters gemäß Formel (I) für die Herstellung von Pulverbeschichtungen: 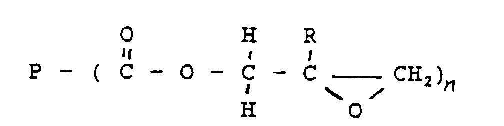 wobei in der Formel:
- P für das Polymergerüst des Polyesters steht, der auf aromatischen Carbonsäuren basiert, ist
- R H oder (C₁-C₅) Alkyl ist; und
- n größer als 2 ist,
und wobei dieser Glycidylester-terminierte Polyester ein Mn zwischen 500 und 10.000, einen Tg zwischen 30°C und 80°C und ein Epoxy-Äquivalentgewicht (EEW) zwischen 250 und 5000 Gramm hat.

2. Verwendung gemäß Anspruch 1, dadurch gekennzeichnet, daß R H ist, Mn zwischen 800 und 5000, Tg zwischen 35°C und 60°C und EEW zwischen 620 und 2000 ist.

3. Pulverbeschichtungszusammensetzung, umfassend einen Glycidylester-terminierten Polyester gemäß Formel (I): 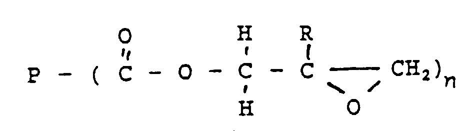 wobei in der Formel:
- P für das Polymergerüst des Polyesters steht, der auf aromatischen Carbonsäuren basiert ist
- R H oder (C₁-C₅) Alkyl ist; und
- n größer als 2 ist,
und wobei dieser Glycidylester-terminierte Polyester ein Mn zwischen 500 und 10.000, einen Tg zwischen 30°C und 80°C und ein Epoxy-Äquivalentgewicht (EEW) zwischen 250 und 5000 Gramm aufweist; und
ein carboxyfunktionales Polymer.

4. Pulverbeschichtungszusammensetzung gemäß Anspruch 3, dadurch gekennzeichnet, daß R H ist, Mn zwischen 800 und 5000, Tg zwischen 35°C und 60°C und die EEW zwischen 620 und 2000 ist.

5. Ganz oder teilweise beschichtete Substrate, dadurch gekennzeichnet, daß als Beschichtungsmaterial eine Pulverbeschichtungszusammensetzung gemäß irgendeinem der Ansprüche 3 bis 4 verwendet wird.

## Revendications

1. Application d'un polyester terminé par un ester de glycidyle selon la formule (I): 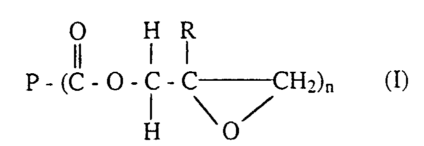 dans laquelle :
- P représente l'ossature polymérique du polyester, qui est à base d'acides carboxyliques aromatiques ;
- R représente H ou un alkyle en C₁ à C₅ ; et
- n est supérieur à 2,
et ledit polyester terminé par un ester de glycidyle a un poids moléculaire moyen Mn compris entre 500 et 10.000, une température de transition vitreuse Tg comprise entre 30°C et 80°C, et un poids équivalent d'époxyde (PEE) compris entre 250 et 5.000 grammes, à la préparation de revêtements en poudre.

2. Application selon la revendication 1, caractérisée en ce que R représente H, le Mₙ est compris entre 800 et 5.000, la Tg est comprise entre 35°C et 60°C, et le PEE est compris entre 620 et 2.000.

3. Composition de revêtement en poudre comprenant un polyester terminé par un ester de glycidyle de formule (I): 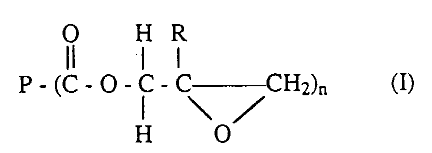 dans laquelle :
- P représente l'ossature polymérique du polyester, qui est à base d'acides carboxyliques aromatiques;
- R représente H ou un alkyle en C₁ à C₅ ; et
- n est supérieur à 2,
et ledit polyester terminé par un ester de glycidyle a un poids moléculaire moyen Mn compris entre 500 et 10.000, une température de transition vitreuse Tg comprise entre 30°C et 80°C, et un poids équivalent d'époxyde (PEE) compris entre 250 et 5.000 grammes et un polymère à fonction carboxyle.

4. Composition de revêtement en poudre selon la revendication 3, caractérisée en ce que R représente H, le Mₙ est compris entre 800 et 5.000, la Tg est comprise entre 35°C et 60°C, et le PEE est compris entre 620 et 2.000.

5. Substrat entièrement ou partiellement recouvert, caractérisé en ce qu'on utilise comme matériau de revêtement une composition de revêtement en poudre selon l'une quelconque des revendications 3-4.
